# EUROPÄISCHE PATENTANMELDUNG

(11) **EP 1 119 166 A2**
(43) Veröffentlichungstag der Anmeldung: **25.07.2001**
(21) Anmeldenummer: 00125610.6
(22) Anmeldetag: 23.11.2000
(51) Int. Cl.: H04M 3/42, H04Q 3/00

(54) **Vermittlungsverfahren mit Hilfe eines Entscheidungsbaumes**

(30) Priorität: 19.01.2000 DE 10002028
(71) Anmelder: Tenovis GmbH & Co. KG, 60326 Frankfurt (DE)
(72) Erfinder: Menk, Klaus-Dieter, 65597 Huenfelden-Ohren (DE)
(74) Vertreter: Beck, Josef

(57) **Zusammenfassung**

Die Realisierung einer Vermittlungsanlage für eingehende Telefonanrufe (A1, A2) erfolgt mit Hilfe eines binären Entscheidungsbaumes. Der Anruf wird dabei derjenigen Bearbeitungseinheit (5, 6, 7) zugeführt, für welche die abgefragten Bedingungen (3, 4) zutreffen. Vorzugsweise ist der Entscheidungsbaum objektorientiert programmiert, wobei die Anlage der Objekte zur Laufzeit des Programms und in Abhängigkeit von den in einer Beschreibungssprache eingegebenen Informationen eines Benutzers erfolgt.

## Beschreibung

### Technisches Gebiet

Die Erfindung betrifft ein Verfahren zur Vermittlung eines Objektes an eine von mehreren Bearbeitungseinheiten sowie eine nach diesem Verfahren arbeitende Vermittlungsanlage.

### Stand der Technik

Die Vermittlung von Objekten an eine für ihre Bearbeitung zuständige Bearbeitungseinheit ist bei verschiedenen Anwendungen erforderlich. Beispielhaft sei ein sogenanntes Callcenter genannt, bei welchem eingehende Telefonanrufe an einen freien Bearbeitungsplatz geleitet werden müssen. Außer Anrufen können auch Faxe oder E-Mails weiterzuleiten sein. Das Ziel der Weiterleitung kann dabei durch den Zustand der Bearbeitungsstationen (zum Beispiel "frei" oder "besetzt") vorgegeben sein oder vom Inhalt beziehungsweise Zustand des Anrufes (bestimmte technische Frage, wiederholter Anruf, Wartezeit etc.) abhängen. Nach dem Stand der Technik sind die Verfahren, nach denen die Vermittlung eines solchen Objektes an eine zuständige Bearbeitungseinheit erfolgt, in der Regel in einer Vermittlungsanlage oder in einer als Computerprogramm realisierten Applikation fest codiert. Bei der Ausführung eines derartigen Verfahrens mit Hilfe eines Computerprogramms sind die Vermittlungsmöglichkeiten und Wege durch das Programm festgelegt und können zur Laufzeit des Programms nicht mehr verändert werden. Außerdem sind derartige Systeme in der Regel auf ein bestimmtes Objekt limitiert, zum Beispiel nur auf Anrufe.

### Darstellung der Erfindung, Aufgabe, Lösung, Vorteile

Aufgabe der Erfindung war es, ein Verfahren und eine Anlage zur Vermittlung von Objekten an Bearbeitungsstationen zur Verfügung zu stellen, welches sich vereinfacht durchführen und flexibel an Änderungen der Vermittlungsanforderungen anpassen lässt.

Diese Aufgabe wird durch ein Verfahren nach Anspruch 1 gelöst.

Das Verfahren zur Vermittlung eines Objektes an eine von mehreren Bearbeitungseinheiten ist dadurch gekennzeichnet, dass die Vermittlung mit Hilfe einer Repräsentation des Objektes entlang eines Entscheidungsbaumes erfolgt, dessen Enden zu den Bearbeitungseinheiten führen und an dessen Knoten eine vom Inhalt der Repräsentation des Objektes und/oder vom Zustand der Bearbeitungseinheiten abhängige Weiterleitung erfolgt. Mit Hilfe des Verfahrens werden somit quasi beliebige Vermittlungsfunktionen auf eine standardisierte Struktur abgebildet, nämlich auf einen Entscheidungsbaum. Durch Anwendung eines derartigen Standardformates für einen Vermittlungsvorgang lässt sich dieser schneller und systematischer umsetzen. Die Vermittlung eines Objektes wird bei dem Verfahren in eine Mehrzahl von Teilschritten zerlegt, wobei ein Teilschritt in der Weiterleitung des Objektes entlang der begrenzten Anzahl an Alternativen eines Knotens des Entscheidungsbaumes besteht. Durch die eingehaltene Systematik und die Zerlegung in kleine Teilschritte wird die Gefahr für Fehler bei der Umsetzung der Vermittlung reduziert.

Bei dem zu vermittelnden Objekt kann es sich nach Anspruch 2 vorzugsweise um einen eingehenden Telefonanruf, eine bestehende Telefonverbindung, ein Fax, eine E-Mail oder dergleichen handeln. Die Vermittlung dieser Objekte ist zum Beispiel in sogenannten Callcentern erforderlich. Dort gehen eine große Anzahl von Anrufen und Nachrichten ein, welche schnell an einen zuständigen und freien Bearbeitungsplatz weitergeleitet werden müssen. Aufgrund der verschiedenen Anforderungen eines solchen Callcenters (zum Beispiel verschiedene fachliche Zuständigkeiten der Bearbeitungsplätze), aufgrund einzuhaltender Reihenfolgen bei der Bearbeitung der Anrufe und aufgrund einer variierenden Besetzung der Bearbeitungsplätze erfordert die Realisierung einer derartigen Vermittlungsaufgabe erheblichen Aufwand. Dieser Aufwand wird mit dem erfindungsgemäßen Verfahren dadurch reduziert, dass die Vermittlung auf einen Entscheidungsbaum abgebildet wird, wobei unterschiedliche Komplexität der Vermittlungsaufgabe sich lediglich in verschiedenen Größen des Entscheidungsbaums niederschlägt, ohne dass die Grundstruktur selbst komplizierter würde. Ein derartig realisiertes Verfahren zur Vermittlung von Telefonanrufen und dergleichen lässt sich demnach erheblich einfacher und daher auch mit einer größeren Funktionssicherheit implementieren.

Der zur Umsetzung des Verfahrens verwendete Entscheidungsbaum ist nach Anspruch 3 vorzugsweise binär, das heißt, dass an jedem Knoten nur zwei Alternativen ("wahr" und "falsch") für die Weiterleitung des Objektes zur Verfügung stehen. Jeder beliebige Entscheidungsbaum lässt sich auf einen derartigen binären Entscheidungsbaum abbilden, wobei letzterer den Vorteil hat, dass seine Struktur aus standardisierten Grundelementen (Knoten mit einem Eingang und zwei Ausgängen) besteht, die sich flexibel zu einem Gesamtsystem beliebiger Komplexität zusammensetzen lassen. Die einzelnen Standardeinheiten (Knoten) bestehen aus einer elementaren Ja/Nein-Entscheidung und lassen sich daher gut automatisieren und von einem Anwender nachvollziehen.

Zur Beschleunigung der Vermittlung mit Hilfe des erfindungsgemäßen Verfahrens können nach Anspruch 4 mehrere zu vermittelnde Objekte bzw. deren Repräsentationen in einer Liste zusammengefasst und parallel durch den Entscheidungsbaum geleitet werden. Die an den Knoten des Entscheidungsbaumes zu treffenden Entscheidungen werden dann immer für alle Objekte der Liste durchgeführt und die Liste wird anschließend in zwei oder mehr Gruppen (Unterlisten) aufgeteilt und zu den entsprechenden Ausgängen des Knotens weitergeleitet.

Das erfindungsgemäße Verfahren wird nach Anspruch 5 vorzugsweise durch ein Computerprogramm realisiert. Mit einem derartigen Computerprogramm lässt sich die Abarbeitung eines Entscheidungsbaumes schnell und flexibel durchführen, wobei die Objekte und Zustände durch Variable des Programms und die Knoten des Entscheidungsbaumes durch logische Operationen des Programms verwirklicht werden können.

Gemäß Anspruch 6 erfolgt hierbei vorzugsweise die Erzeugung eines objektorientierten Computerprogramms, wobei für die Äste des Entscheidungsbaumes eine Klasse definiert wird. Die Realisierung des Entscheidungsbaumes mit Hilfe einer objektorientierten Programmierung bietet sich besonders an, da ein solcher Entscheidungsbaum aus Standardeinheiten, nämlich den Knoten, besteht, welche in einer von der jeweiligen Anwendung abhängigen Weise miteinander verknüpft sind. Bei der Anlage des Entscheidungsbaumes können dabei Vorteile der objektorientierten Programmierung wie insbesondere eine Vererbung von Eigenschaften vorteilhaft ausgenutzt werden, zum Beispiel die Vererbung von Eigenschaften eines höheren Knotens an einen nachgeordneten Knoten.

Bei einer Weiterentwicklung der Erfindung nach Anspruch 7 sind die Struktur des Entscheidungsbaumes, Zusatzinformationen zu den zu vermittelnden Objekten und/oder die logischen Bedingungen, die an den Knoten des Entscheidungsbaumes abzuprüfen sind, durch Benutzereingaben während der Programmlaufzeit definierbar. Das heißt, dass die Vermittlung nicht nach einem starren, durch die einmal vorgenommene Programmierung festgelegten Schema erfolgt, sondern dass dynamisch während der Laufzeit des Programms eine Änderung der Vermittlung erfolgen kann. Zu diesem Zweck wird vorzugsweise eine eigene Beschreibungssprache (Skript-Sprache) ähnlich einer Programmiersprache verwendet, in welcher die Objekte, die Bearbeitungseinheiten und die logischen Bedingungen der Knoten von einem Benutzer formuliert werden können, und die von dem ausgeführten Vermittlungsprogramm während der Laufzeit eingelesen und in einen entsprechenden Entscheidungsbaum beziehungsweise Vermittlungsweg umgesetzt werden können. Der Entscheidungsbaum kann somit komplett, inklusive Logik, in einer eigenen Skript-Sprache definiert werden. Das Programm ist in der Lage, dynamisch zur Laufzeit eine solche neue Definition zu lesen und einen darin definierten Entscheidungsbaum aufzubauen, der dann aktiv wird. Damit wird eine neue Logik (Routing) programmiert. Mit Hilfe des Vermittlungsprogramms und der Beschreibungssprache ist es demnach möglich, dass ein Anwender, der nur die benutzerfreundliche Beschreibungssprache kennt, einen Vermittlungsvorgang quasi beliebiger Komplexität analysieren und in ein Computerprogramm umsetzen kann. Dabei sind Änderungen des Vermittlungsweges noch während der Ausführung des Programms möglich.

Die Erfindung betrifft weiterhin nach Anspruch 8 eine Vermittlungsanlage zur Weiterleitung von Objekten wie einem Telefonanruf, einem Fax und/oder einer E-Mail an Bearbeitungsstationen. Die Vermittlungsanlage ist dadurch gekennzeichnet, dass das Objekt als eine Variable repräsentiert wird, welche in einem Verfahren der oben geschilderten Art entlang eines Entscheidungsbaumes zu einer Bearbeitungseinheit geleitet wird. Eine derartige Vermittlungsanlage kann insbesondere in Callcentern eingesetzt werden. Ihr Vorteil besteht wie oben erläutert darin, dass auch komplexe Vermittlungssituationen in einer standardisierten, überschaubaren und leicht nachprüfbaren Weise umgesetzt werden und dass darüber hinaus Änderungen der Vermittlungsfunktionen auch während des Betriebs der Vermittlungsanlage möglich sind.

### Bester Weg zur Ausführung der Erfindung

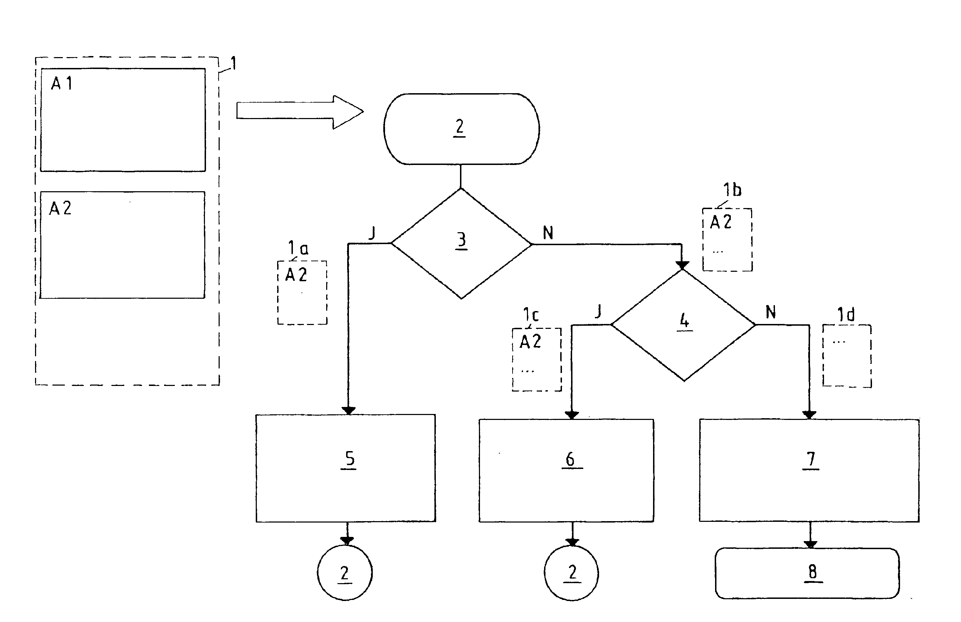

Im folgenden wird die Erfindung mit Hilfe der Figur beispielhaft erläutert.

Die Abbildung zeigt das Schema eines einfachen Entscheidungsbaumes, mit dessen Hilfe die Vermittlung eines Anrufes in einem Callcenter vorgenommen werden kann. Jeder komplexe Routing-Algorithmus einer Vermittlungsanlage lässt sich auf einen derartigen logischen (binären) Entscheidungsbaum abbilden. Am Stamm (Wurzel) des Baumes befindet sich die sogenannte Quelle 2 (Source), das heißt der Eintrittspunkt für das zu vermittelnde Objekt bzw. einer Repräsentation des Objektes in den Entscheidungsbaum. Am Ende der Äste des Baumes sitzen die Bearbeitungseinheiten 5, 6 und 7, zu denen das Objekt (Telefonanruf) in geeigneter Weise weiterzuvermitteln ist.

Die zu vermittelnden Anrufe sind zu mehreren in einer Liste 1 zusammengefasst, welche von dem Entscheidungsbaum parallel bearbeitet werden kann. Die Repräsentation eines einzelnen Objektes besteht dabei aus einer Zusammenfassung mehrerer Zustandsvariabler, wie zum Beispiel einem Bezeichner für den Anruf ("A1", "A2", ...), einem Wert für den Status des Anrufs ("NULL", "BEGRÜSST", "BEARBEITET", "VERABSCHIEDET"), einer Priorität (Ziffer), einer Wartezeit (in s) etc.

Mit Hilfe des beispielhaft dargestellten Entscheidungsbaumes wird eine Vermittlung eines Anrufes ausgeführt, bei der ein Anrufer zunächst einer Begrüßungseinheit 5 zugeleitet wird (zum Beispiel zur Ansage eines Bandtextes), anschließend zu einer Bearbeitungseinheit 6 zur Erledigung der eigentlichen Bearbeitung des Anrufes (zum Beispiel Auskunftserteilung) weitergeleitet und abschließend einer Verabschiedungseinheit 7 zur Verabschiedung des Anrufers und Beendigung des Telefongespräches zugeführt wird. Ein Anruf kann dabei vier verschiedene Zustände annehmen, nämlich den Zustand "NULL" für einen neu eingegangenen und noch völlig unbearbeiteten Anruf, den Zustand "BEGRÜSST" für einen Anruf, welcher bereits bei der Begrüßungseinheit war, aber noch nicht bearbeitet wurde, den Zustand "BEARBEITET" für einen bereits bearbeiteten, aber noch nicht verabschiedeten Anruf sowie den Zustand "VERABSCHIEDET" für einen ordnungsgemäß verabschiedeten und beendeten Anruf. Je nach Zustand des Anrufes muss dieser einer anderen der drei Bearbeitungseinheiten 5, 6 und 7 zugeführt werden.

Ausgehend von der Quelle 2 wird die Liste 1 der zu vermittelnden Anrufe A1, A2, ... zunächst dem ersten Entscheidungsknoten 3 zugeführt. Hier findet eine Abfrage statt, ob der Status des Anrufes gleich "NULL" ist. Diejenigen Anrufe, für die diese Bedingung zutrifft, werden in eine Unterliste 1b übertragen, welche der Begrüßungseinheit 5 zugeführt wird. Dort erfolgt eine Begrüßung des Anrufes A1, dessen Status anschließend auf "BEGRÜSST" gesetzt wird und der an die Quelle 2 zurückgeleitet wird.

Diejenigen Anrufe, für die die Bedingung des Knotens 3 nicht zutrifft, werden in eine Unterliste 1b überführt. Diese Unterliste wird im nächsten Knoten 4 einer zweiten Differenzierung unterzogen, in welcher abgefragt wird, ob der Status "BEGRÜSST" ist oder nicht. Diejenigen Anrufe, für die diese Bedingung wahr ist, werden in eine Unterliste 1b überführt und an die Bearbeitungseinheit 6 weitergeleitet. Im Beispielfall ist dies für den Anruf A2 der Fall. In der Bearbeitungseinheit 6 wird der Anruf in geeigneter Weise bearbeitet, zum Beispiel eine gewünschte Auskunft erteilt. Nach Abschluss der Bearbeitung wird der Status des Anrufes auf "BEARBEITET" gesetzt und der Anruf an die Quelle 2 weitergeleitet.

Diejenigen Anrufe, für welche die Abfrage im Knoten 4 negativ war, werden in eine Unterliste 1d überführt und an die Verabschiedungseinheit 7 geleitet. Dort erfolgt eine Verabschiedung des Anrufes, zum Beispiel durch einen Standardtext oder das Abspulen einer gewünschten Auskunft. Anschließend wird der Status des Anrufes auf "VERABSCHIEDET" gesetzt, und der Vermittlungsvorgang ist beendet. Gegebenenfalls kann in einem Schritt 8 eine Endbearbeitung des Anrufes erfolgen, zum Beispiel eine Speicherung in einer Datenbank.

In dem dargestellten Entscheidungsbaum wird also ein zu verarbeitendes Objekt durch alle möglichen Äste geschickt, bis die geforderten Bedingungen erfüllt sind. Jeder Teilbereich zwischen zwei Knoten eines Astes (Zweig) enthält eine logische Bedingung, die eine Verknüpfung aus Systemparametern und Informationen des zu verteilenden Objektes herstellt und als Ausgangswert ein "wahr" oder "falsch" liefert. Bei einem "wahr" trifft die abgefragte Bedingung zu und das Objekt wurde erfolgreich vermittelt. Bei einem "falsch" wird die Bearbeitung in dem gerade betrachteten Ast für dieses Objekt abgebrochen.

Das Verteilsystem wird vorzugsweise in einer objektorientierten Programmiersprache realisiert und baut die logische Baumstruktur zur Laufzeit auf. Die Definition der Quellen, Bearbeitungseinheiten (Ziele) und des logischen Baumes wird mittels einer eigenen Beschreibungssprache in das Verteilsystem geladen und dort als Entscheidungsbaum-Instanz realisiert. Eine neue Entscheidungslogik kann damit auch zur Laufzeit des Programms geladen werden, ohne das System zu stoppen.

Das Verfahren wird vorzugsweise in einem eigenen Prozess realisiert, der dann entsprechend Telefonanrufe, E-Mails etc. zu den Zielen vermittelt. Der Prozess wird in einer Art Programmiersprache (Skript-Sprache) dynamisch während des Betriebs neu programmiert, wobei der oben beschriebene Entscheidungsbaum entsteht. Die Sprache wird vorzugsweise nicht in einem Editor programmiert, sondern aus einem speziellen grafischen Tool generiert. Ein Beispiel einer solchen Sprache ist im Folgenden wiedergegeben:

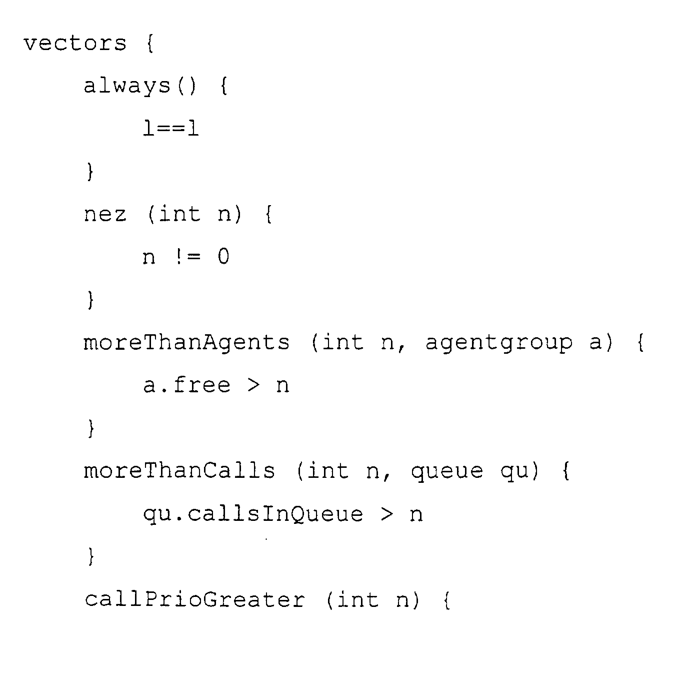

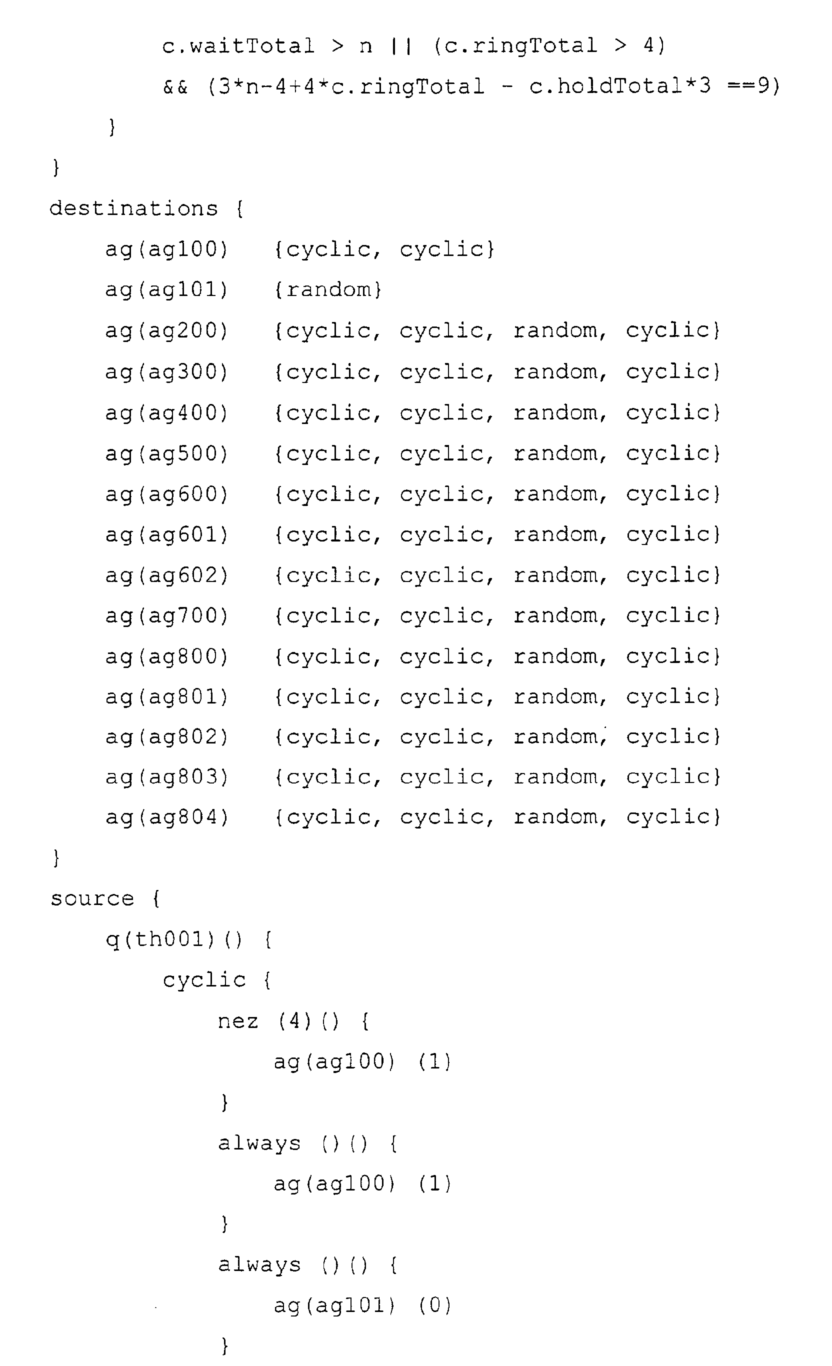

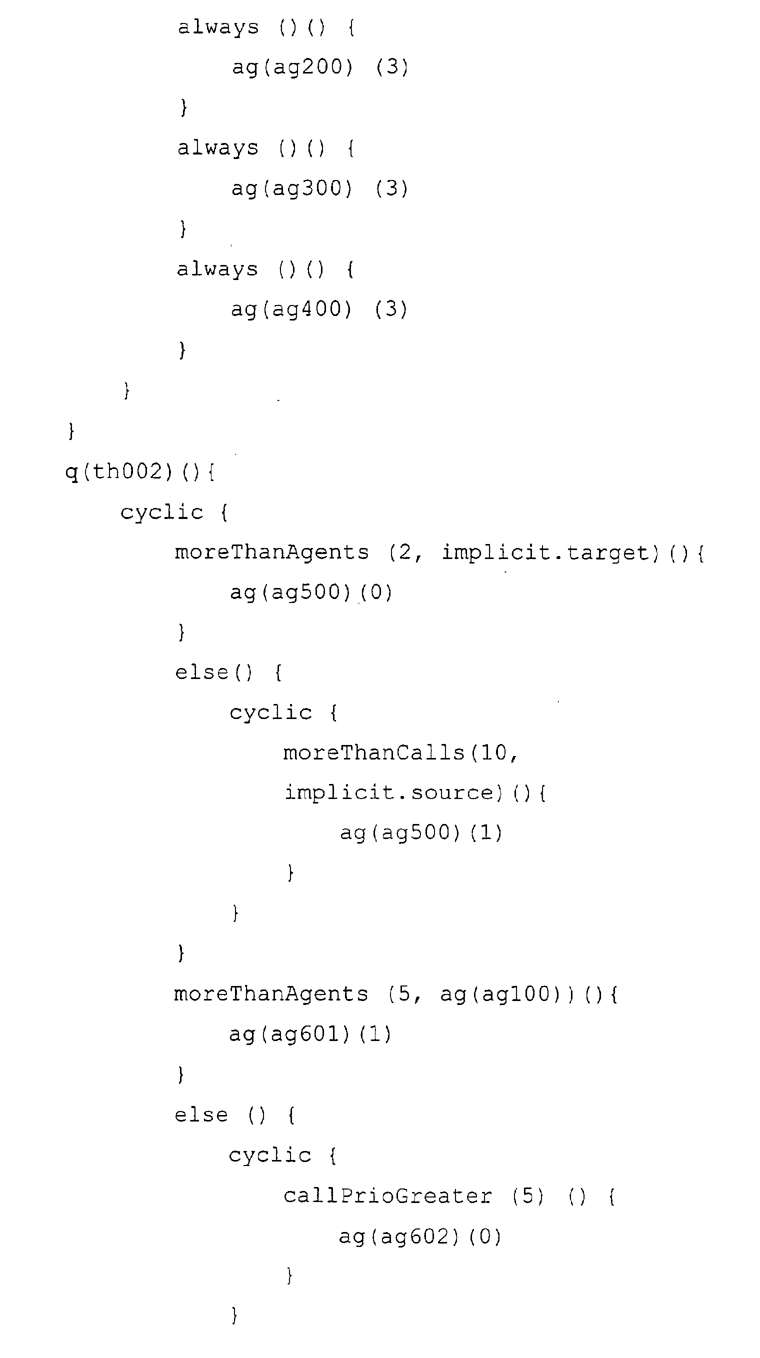

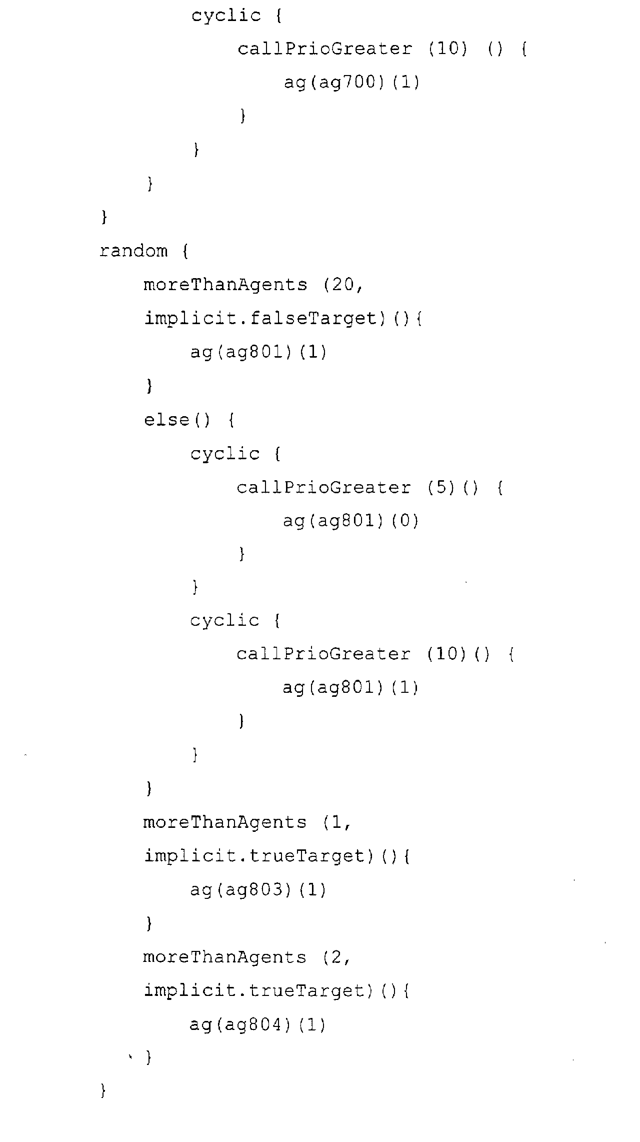

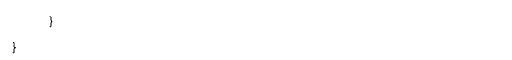

Zur Optimierung der Bearbeitung wird immer eine komplette Liste von Objekten in den Entscheidungsbaum geladen und quasi parallel abgearbeitet. Bei jedem Entscheidungsknoten wird die Liste in zwei Unterlisten entsprechend den Entscheidungswerten "wahr" und "falsch" aufgeteilt.

Die Liste 1 beziehungsweise die Unterlisten 1b, 1c, 1d, 1d der Objekte können mit geeigneten Sortierprogrammen nach verschiedenen Kriterien sortiert werden. Zum Beispiel kann das Sortierprogramm eine Ordnung in erster Folge nach einem ersten Kriterium (zum Beispiel Alter beziehungsweise Wartezeit des Objektes) und in einer zweiten Folge nach einem zweiten Kriterium (zum Beispiel Priorität) sortiert werden. Die Anzahl der Sortierbedingungen ist dabei quasi beliebig.

Zu den Objekten können beliebige und frei definierbare Zusatzinformationen gespeichert werden. Diese können in der beschriebenen Weise wie die Zusatzinformation "Status" von der Entscheidungslogik zur Vermittlung des Objektes benutzt werden. In einer Bearbeitungseinheit kann auch eine Veränderung der Zusatzinformationen eines Objektes erfolgen, zum Beispiel die Veränderung der Variablen "Status" bei dem in der Figur gezeigten Beispiel. Außer Variablen mit bestimmten Werten kann ein Objekt auch Berechnungsvorschriften (mathematische Formeln, Methoden) enthalten, welche von den Bearbeitungseinheiten ausgewählt werden und zum Beispiel zur Veränderung von anderen Zusatzinformationen benutzt werden. Auf diese Weise lässt sich leicht ein Statusdiagramm (state-diagram) programmieren, indem man ein Informationselement definiert, das den Status enthält.

## Patentansprüche

1. Verfahren zur Vermittlung eines Objektes an eine von mehreren Bearbeitungseinheiten (5, 6, 7),
dadurch gekennzeichnet, dass die Vermittlung mit Hilfe einer Repräsentation (A1, A2) des Objektes entlang eines Entscheidungsbaumes erfolgt, dessen Enden zu den Bearbeitungseinheiten führen und an dessen Knoten (3, 4) eine vom Inhalt der Repräsentation des Objektes und/oder vom Zustand der Bearbeitungseinheiten abhängige Weiterleitung erfolgt.

2. Verfahren nach Anspruch 1,
dadurch gekennzeichnet, dass das zu vermittelnde Objekt ein Telefonanruf, eine bestehende Telefonverbindung, ein Fax und/oder eine E-Mail ist.

3. Verfahren nach Anspruch 1 oder 2,
dadurch gekennzeichnet, dass der Entscheidungsbaum binär ist.

4. Verfahren nach einem der Ansprüche 1 bis 3,
dadurch gekennzeichnet, dass mehrere Repräsentationen (A1, A2) von Objekten in einer Liste (1) zusammengefasst sind und parallel durch den Entscheidungsbaum geleitet werden, wobei an jedem Knoten (3, 4) des Entscheidungsbaumes eine Aufteilung der Liste in Unterlisten (1a, 1b, 1c, 1d) erfolgt.

5. Verfahren nach einem der Ansprüche 1 bis 4,
dadurch gekennzeichnet, dass es mit Hilfe eines Computerprogramms realisiert wird.

6. Verfahren nach Anspruch 5,
dadurch gekennzeichnet, dass es mit Hilfe eines objektorientierten Computerprogramms realisiert wird, wobei für die Äste des Entscheidungsbaumes eine Klasse definiert wird.

7. Verfahren nach einem der Ansprüche 5 oder 6,
dadurch gekennzeichnet, dass die Struktur des Entscheidungsbaumes, Zusatzinformationen zu den Repräsentationen der Objekte (A1, A2) und/oder die logischen Bedingungen der Knoten (3, 4) des Entscheidungsbaumes durch Benutzereingaben während der Programmlaufzeit definiert werden können.

8. Vermittlungsanlage zur Weiterleitung eines Objektes in Form eines Telefonanrufes, eines Faxes und/oder einer E-Mail an Bearbeitungseinheiten (5, 6, 7),
dadurch gekennzeichnet, dass das Objekt als eine Variable (A1, A2) repräsentiert wird, welche in einem Verfahren nach einem der Ansprüche 1 bis 7 entlang eines Entscheidungsbaumes zu einer Bearbeitungseinheit geleitet wird.
